# EUROPEAN PATENT APPLICATION

(11) **EP 4 661 193 A1**
(43) Date of publication of application: **10.12.2025**
(21) Application number: 24749915.5
(22) Date of filing: 15.01.2024
(51) Int. Cl.: H01M 50/531, H01M 50/107, H01M 50/534, H01M 50/545, H01M 50/56, H01M 50/564

(54) **METHOD FOR MANUFACTURING CYLINDRICAL BATTERY, AND CYLINDRICAL BATTERY**

(30) Priority: 31.01.2023 JP 2023012490
(71) Applicant: Panasonic Energy Co., Ltd., Moriguchi-shi, Osaka 570-8511 (JP)
(72) Inventor: FUKUOKA, Takahiro, Kadoma-shi, Osaka 571-0057 (JP); HAMAGUCHI, Yusuke, Kadoma-shi, Osaka 571-0057 (JP); WATANABE, Yuma, Kadoma-shi, Osaka 571-0057 (JP); YATOMI, Shota, Kadoma-shi, Osaka 571-0057 (JP)
(74) Representative: Eisenführ Speiser
(86) International application number: PCT/JP2024/000728
(87) International publication number: WO 2024/161961

(57) **Abstract**

A method for manufacturing a cylindrical battery according to an aspect of the present disclosure comprises: a step for radiating a laser beam such that the reflectance of light is increased on at least a portion of an inner surface (31a) of a bottom (31) of an outer can (16) before housing an electrode body; and a step for joining, by ultrasonic welding, a lead extending from the electrode body to a laser irradiated portion of the inner surface (31a) irradiated with the laser beam. It is preferable to reduce the surface roughness Ra of the laser irradiated portion by irradiation with the laser beam. According to the method for manufacturing a cylindrical battery of the present disclosure, it is possible to suppress variations in the joining strength between the lead and the outer can (16) when the lead is joined to the bottom (31) of the outer can (16) by ultrasonic welding.

## Description

### TECHNICAL FIELD

The present disclosure generally relates to a method of manufacturing a cylindrical battery, and a cylindrical battery.

### BACKGROUND ART

Existing cylindrical batteries include a cylindrical battery disclosed in PATENT LITERATURE 1. The cylindrical battery comprises an electrode assembly in which a positive electrode and a negative electrode are wound with a separator intervening therebetween, an outer can that has a bottomed cylindrical shape and houses the electrode assembly, and a sealing assembly closing an opening portion of the outer can. A positive electrode lead extending from the positive electrode is welded to the sealing assembly, and the sealing assembly constitutes a positive electrode terminal. Further, a negative electrode lead extending from the negative electrode is welded to an inner surface of a bottom portion of the outer can, and the outer can constitutes a negative electrode terminal.

### CITATION LIST

### PATENT LITERATURE

PATENT LITERATURE 1: Japanese Unexamined Patent Application Publication No. Hei09-274923

### SUMMARY

When the negative electrode lead is joined to the bottom portion of the outer can, resistance welding or laser welding is generally used, but spatters scattered in welding may deteriorate quality of the battery. In contrast, when ultrasonic welding is used for joining of the negative electrode lead and the bottom portion of the outer can, spatters do not occur, and the quality of the battery may be improved. In a case of using the ultrasonic welding, to transfer ultrasonic vibration to the bottom portion of the outer can housing the wound electrode assembly, it is necessary to use a long rod-shaped horn to be inserted into a hollow portion of the wound electrode assembly. Therefore, it is difficult to join the negative electrode lead and the bottom portion of the outer can, and joining strength is likely to be varied.

Therefore, it is an advantage of the present disclosure to provide a method of manufacturing a cylindrical battery that may suppress variation in joining strength of a lead and a bottom portion of an outer can, and a cylindrical battery that is small in variation in joining strength of a lead and an outer can and is excellent in quality and battery performance.

A method of manufacturing a cylindrical battery according to the present disclosure is a method of manufacturing a cylindrical battery comprising an electrode assembly in which a first electrode and a second electrode are wound with a separator intervening therebetween, an outer can having a bottomed cylindrical shape and configured to house the electrode assembly, and a sealing assembly configured to close an opening portion of the outer can, the first electrode and an inner surface of a bottom portion of the outer can being electrically connected through a lead, and the method includes applying a laser beam to at least a part of the inner surface of the bottom portion of the outer can before the electrode assembly is housed, to increase a light reflectance

A cylindrical battery according to the present disclosure comprises: an electrode assembly in which a positive electrode and a negative electrode are wound with a separator intervening therebetween; an outer can having a bottomed cylindrical shape and configured to house the electrode assembly; a sealing assembly configured to close an opening portion of the outer can; and a negative electrode lead made of a clad material fabricated by bonding a copper plate material and a nickel plate material, and having a copper layer disposed on one side in a thickness direction, in which the copper layer of the negative electrode lead is joined to an inner surface of a bottom portion of the outer can.

According to the method of manufacturing the cylindrical battery of the present disclosure, it is possible to suppress variation in joining strength of the lead and the outer can when the lead is joined to the bottom portion of the outer can by ultrasonic welding. Further, according to the cylindrical battery of the present disclosure, it is possible to improve quality and battery performance while suppressing variation in joining strength of the lead and the outer can.

### BRIEF DESCRIPTION OF DRAWING

FIG. 1 is a cross-sectional view of a cylindrical battery in an axial direction according to an embodiment of the present disclosure.
FIG. 2 is a diagram to explain an example of a method of manufacturing the above-described cylindrical battery.
FIG. 3 is a schematic plan view illustrating a state of an inner surface of a bottom portion of an outer can after a laser beam is applied to a center part of the inner surface of the bottom portion.
FIG. 4 is a diagram to explain ultrasonic welding of lead to a laser-beam applied portion of the bottom portion of the outer can.

### DESCRIPTION OF EMBODIMENTS

An embodiment of a cylindrical battery according to the present disclosure is described in detail below with reference to drawings. The cylindrical battery according to the present disclosure may be a primary battery or a secondary battery. Further, the cylindrical battery according to the present disclosure may be a battery using an aqueous electrolyte or a battery using a non-aqueous electrolyte. In the following, as a cylindrical battery 10 according to the embodiment, a non-aqueous electrolyte secondary battery (lithium ion battery) using a non-aqueous electrolyte is illustrated; however, the cylindrical battery according to the present disclosure is not limited thereto, and the electrolyte may be an aqueous electrolyte.

It is assumed from the beginning that a new embodiment is constructed by appropriately combining characteristic parts of the embodiment and a modification described below. In the following embodiment, the same components are denoted by the same reference numerals in the drawings, and repetitive description is omitted. The plurality of drawings include schematic diagrams, and a ratio of dimensions such as a vertical length, a horizontal length, and a height of each member is not necessarily consistent among different drawings. In the present specification, a side provided with a sealing assembly 17 of the cylindrical battery 10 in an axial direction (height direction) is defined as an "upper side", and a side provided with a bottom portion 31 of an outer can 16 in the axial direction is defined as a "lower side". Among the components described below, components not described in independent claims that recite the highest level concepts are optional components and are not essential components. The present disclosure is not limited to the following embodiment and a modification thereof, and various improvements and changes can be made within the matters described in the claims of the present application and the equivalent scope thereof.

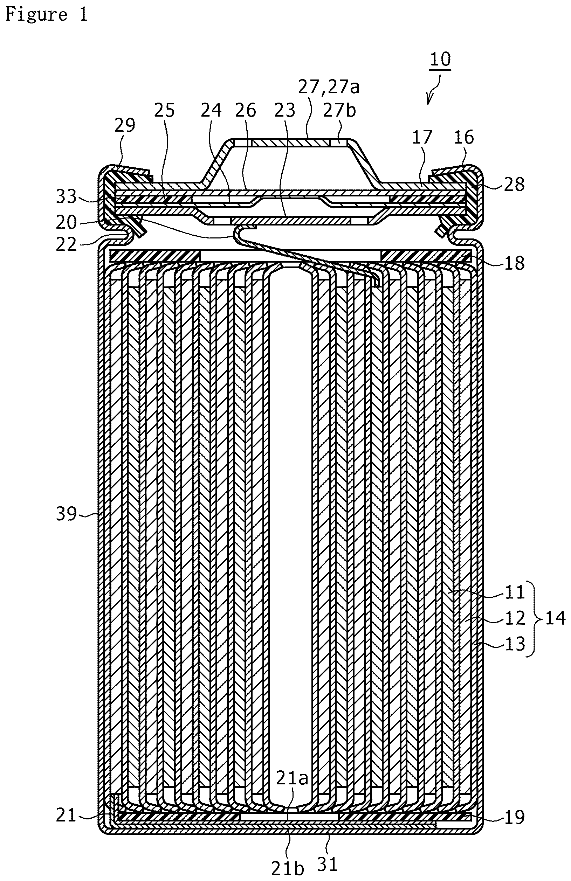

FIG. 1 is a cross-sectional view of the cylindrical battery 10 in the axial direction according to the embodiment of the present disclosure. As illustrated in FIG. 1, the cylindrical battery 10 comprises an electrode assembly 14, the outer can 16 that has a bottomed cylindrical shape and houses the electrode assembly 14, and the sealing assembly 17 closing an opening portion of the outer can 16. The outer can 16 houses a non-aqueous electrolyte together with the electrode assembly 14. The outer can 16 includes, at an upper end part, a shoulder portion 29 that is bent inward in a radial direction and extends inward. The outer can 16 includes a grooved portion 22 provided on a side wall, and the sealing assembly 17 is supported by the grooved portion 22 and closes the opening portion of the outer can 16.

The cylindrical battery 10 further comprises a gasket 28 interposed between the outer can 16 and the sealing assembly 17. The gasket 28 is a ring-shaped resin member attached to an outer peripheral portion of the sealing assembly 17, and insulates the sealing assembly 17 from the outer can 16. The gasket 28 closes a gap between the outer can 16 and the sealing assembly 17, to seal an inside of the battery. The gasket 28 is made of, for example, polyolefin.

The non-aqueous electrolyte contains a non-aqueous solvent and an electrolytic salt dissolved in the non-aqueous solvent. As the non-aqueous solvent, for example, esters, ethers, nitriles, amides, or a mixed solvent of two or more thereof is used. The non-aqueous solvent may contain a halogen substitution product in which at least some hydrogen atoms of the solvent are substituted with halogen atoms such as fluorine. Examples of the non-aqueous solvent include ethylene carbonate (EC), ethyl methyl carbonate (EMC), dimethyl carbonate (DMC), and a mixed solvent thereof. As the electrolytic salt, for example, a lithium salt such as LiPF₆ is used. The non-aqueous electrolyte is not limited to a liquid electrolyte, and may be a solid electrolyte.

The electrode assembly 14 includes a positive electrode 11, a negative electrode 12, and separators 13, and has a wound structure in which the positive electrode 11 and the negative electrode 12 are wound in a spiral shape with the separators 13 intervening therebetween. The negative electrode 12 is an example of a first electrode, and the positive electrode 11 is an example of a second electrode. The positive electrode 11, the negative electrode 12, and the separators 13 are each a band-shaped long body, and are alternately stacked in the radial direction of the electrode assembly 14 by being wound in the spiral shape. To prevent precipitation of lithium, the negative electrode 12 is formed to have a dimension slightly greater than the positive electrode 11. In other words, the negative electrode 12 is formed longer than the positive electrode 11 in a longitudinal direction and a width direction. The separators 13 are each formed to have a dimension slightly greater than at least the positive electrode 11, and for example, two separators 13 are disposed to sandwich the positive electrode 11.

A positive electrode lead 20 and a negative electrode lead 21 are connected to the electrode assembly 14. The positive electrode lead 20 electrically connects the positive electrode 11 and the sealing assembly 17, and the negative electrode lead 21 electrically connects the negative electrode 12 and a bottom portion 31 of the outer can 16. In the example illustrated in FIG. 1, the positive electrode lead 20 extends toward the sealing assembly 17 through an opening portion of an upper insulating plate 18, and the negative electrode lead 21 extends toward the bottom portion 31 of the outer can 16 through an outside of a lower insulating plate 19.

The positive electrode 11 includes a positive electrode core, and a positive electrode mixture layer provided on at least one surface of the positive electrode core. As the positive electrode core, a foil of a metal such as aluminum and an aluminum alloy that is stable within a potential range of the positive electrode 11, a film in which the metal is disposed on a surface layer, or the like can be used. The positive electrode mixture layer preferably contains a positive electrode active material, a conductive agent such as acetylene black, and a binder such as polyvinylidene fluoride (PVdF), and is preferably provided on both surfaces of the positive electrode core. As the positive electrode active material, for example, a lithium transition metal composite oxide containing Ni, Co, Mn, Al, or the like is used. The positive electrode lead 20 is connected to the positive electrode 11, and is preferably directly joined to the positive electrode core by ultrasonic welding or the like.

The negative electrode 12 includes a negative electrode core, and a negative electrode mixture layer provided on at least one surface of the negative electrode core. As the negative electrode core, a foil of a metal such as copper and a copper alloy that is stable within a potential range of the negative electrode 12, a film in which the metal is disposed on a surface layer, or the like can be used. The negative electrode mixture layer preferably contains a negative electrode active material and a binder such as a styrene-butadiene rubber (SBR) and PVdF, and is preferably provided on both surfaces of the negative electrode core. As the negative electrode active material, for example, graphite or a silicon-containing compound is used. The negative electrode lead 21 is preferably directly joined to the negative electrode core by ultrasonic welding or the like.

The outer can 16 is generally made of a metal mainly containing iron, for example, a nickel-plated iron material, but may be made of a metal mainly containing aluminum or the like. The outer can 16 includes a cylindrical portion 39 and the bottom portion 31, and the cylindrical portion 39 includes the annular grooved portion 22 and the annular shoulder portion 29. The grooved portion 22 is formed by spinning a part of the cylindrical portion 39 to dent the part of the cylindrical portion 39 inward in the radial direction. The shoulder portion 29 is formed when an upper end part of the cylindrical portion 39 is bent inward in the radial direction and is swaged to a peripheral edge portion 33 of the sealing assembly 17, and extends inward in the radial direction.

The sealing assembly 17 is fixed to the outer can 16 by being held by the shoulder portion 29 and the grooved portion 22 through the gasket 28 by swaging. The grooved portion 22 is provided at a position separated by a predetermined length from an upper end of the outer can 16. The predetermined length is a length corresponding to, for example, 1% to 20% of a length of the outer can 16 in the axial direction. The gasket 28 is strongly compressed by the shoulder portion 29, and a part of the gasket 28 protrudes inward in the radial direction from a space between the shoulder portion 29 and the sealing assembly 17.

The sealing assembly 17 has a structure in which a terminal plate 23, a lower vent member 24, an insulating plate 25, an upper vent member 26, and a sealing plate 27 are stacked in this order from the electrode assembly 14 side. Each of the members constituting the sealing assembly 17 has, for example, a disk shape or a ring shape. The members except for the insulating plate 25 are electrically connected to one another. The sealing plate 27 has a projecting shape in which a center part in the radial direction projects outward. A projection 27a of the sealing plate 27 includes an inclined surface part formed in an annular shape, and a flat top surface part surrounded by the inclined surface part. One or more vent holes 27b are provided in the top surface part.

The lower vent member 24, the insulating plate 25, and the upper vent member 26 constitute a current interruption mechanism. The lower vent member 24 and the upper vent member 26 are connected at respective center parts, and the insulating plate 25 is interposed between a peripheral edge portion of the lower vent member 24 and a peripheral edge portion of the upper vent member 26. If abnormality occurs on the cylindrical battery 10 and internal pressure is increased, the lower vent member 24 is deformed so as to push up the upper vent member 26 toward the sealing plate 27 and is broken, which interrupts the current path between the lower vent member 24 and the upper vent member 26. If the internal pressure is further increased, the upper vent member 26 is broken, and gas is discharged through the vent holes 27b of the sealing plate 27.

One end part of the positive electrode lead 20 is joined to the positive electrode core by ultrasonic welding or the like, and the other end part of the positive electrode lead 20 is joined to a lower surface of the terminal plate 23 by laser welding, ultrasonic welding, or the like. As a result, the sealing plate 27 that is a top plate of the sealing assembly 17 electrically connected to the terminal plate 23 serves as a positive electrode terminal.

The negative electrode lead 21 is made of a clad material fabricated by bonding a nickel plate material and a copper plate material. The negative electrode lead 21 is formed by, for example, performing heat treatment in a state where one side surface of the nickel plate material and one side surface of the copper plate material are brought into press contact with each other by a press, to integrate the nickel plate material and the copper plate material. A nickel layer 21a is disposed on one side of the negative electrode lead 21 in a thickness direction, and a copper layer 21b is disposed on the other side of the negative electrode lead 21 in the thickness direction.

One end part of the negative electrode lead 21 is joined to the negative electrode core by ultrasonic welding or the like, and the copper layer 21b at the other end part of the negative electrode lead 21 is joined to an inner surface of the bottom portion 31 of the outer can 16 by ultrasonic welding. As a result, the outer can 16 electrically connected to the negative electrode 12 serves as a negative electrode terminal. The case where the sealing assembly 17 constitutes the positive electrode terminal, and the outer can 16 constitutes the negative electrode terminal is described; however, the sealing assembly may constitute the negative electrode terminal, and the outer can may constitute the positive electrode terminal.

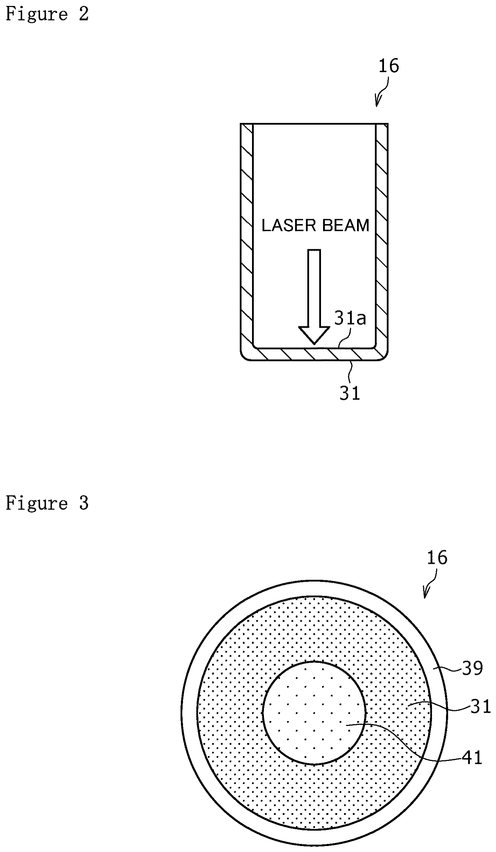

Next, an example of a method of manufacturing the above-described cylindrical battery 10 is described. First, as illustrated in FIG. 2, a laser beam is applied to at least a part of an inner surface 31a of the bottom portion 31 of the outer can 16 having the bottomed cylindrical shape before the electrode assembly 14 is housed, so as to increase a light reflectance.

FIG. 3 is a schematic plan view illustrating a state of the inner surface 31a after the laser beam is applied to a circular region at a center part of the inner surface 31a. As illustrated in FIG. 3, the laser beam is applied to develop gloss at a laser-beam applied portion 41. By confirming development of gloss at the laser-beam applied portion 41, it is possible to confirm increase in light reflectance of the laser-beam applied portion 41. A surface roughness Ra of the laser-beam applied portion 41 is preferably reduced by application of the laser beam.

As the laser beam to be applied, an ultraviolet laser beam can be suitably used, but a wavelength of the laser beam to be applied may be longer than a wavelength of the ultraviolet laser beam. The laser beam to be applied may be any laser beam as long as the laser beam can increase the light reflectance of the laser-beam applied portion 41.

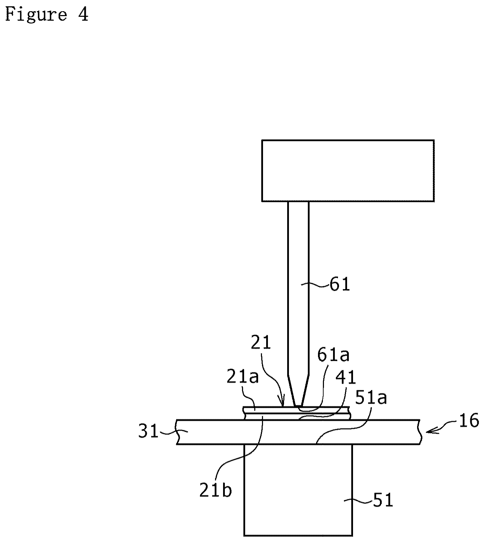

Next, the copper layer 21b of the negative electrode lead 21 extending from the electrode assembly 14 is joined to the laser-beam applied portion 41 by ultrasonic welding. FIG. 4 is a schematic diagram to explain the ultrasonic welding. In FIG. 4, illustration of the electrode assembly 14 is omitted.

As illustrated in FIG. 4, the bottom portion 31 of the outer can 16 is placed on an upper surface 51a of an anvil 51. Thereafter, a long rod-shaped horn (ultrasonic welding tip) 61 of an ultrasonic welding apparatus is inserted into a hollow portion (not illustrated) of the electrode assembly 14, and the nickel layer 21a of the negative electrode lead 21 extending from the electrode assembly 14 is pressed against the laser-beam applied portion 41 of the bottom portion 31 by a horn tip portion 61a. Finally, in the pressing state, ultrasonic vibration is propagated to a lead portion held by the horn tip portion 61a and the bottom portion 31 through the horn 61. In such a manner, the copper layer 21b of the negative electrode lead 21 is ultrasonic-welded to the laser-beam applied portion 41 of the bottom portion 31. Thereafter, fabrication of the grooved portion 22, sealing of the opening portion of the outer can 16, and the like are performed using well-known methods, to fabricate the cylindrical battery 10.

### [Joining Strength Measurement Test]

### <Example 1>

An outer can having a bottomed cylindrical shape was fabricated, and a copper layer of a lead fabricated using the above-described clad material by the above-described method on the same day as fabrication of the outer can was joined to an inner surface of a bottom portion of the outer can by ultrasonic welding. Thereafter, joining strength of a joining potion between the lead and the outer can was measured by a lead tensile test. An ultrasonic welding apparatus in which a maximum outer diameter of a rod-shaped horn was 3 mm, an outer diameter of a tip was 1.4 mm, and a length of the horn was 105 mm was used. A thickness of the lead was 0.1 mm, and a thickness of the bottom portion of the outer can was 0.4 mm. The outer can was made of a nickel-plated iron material. The ultrasonic welding was performed with energy of 2.1 J.

### <Example 2>

Joining strength of a joining portion between a lead and an outer can was measured in a manner similar to Example 1 except that the lead was joined to a bottom portion of the outer can by ultrasonic welding after a lapse of 90 days from a day when the outer can was fabricated.

### <Example 3>

Joining strength of a joining portion between a lead and an outer can was measured in a manner similar to Example 1 except that a laser beam was applied to a center part of an inner surface of a bottom portion of the outer can after a lapse of 90 days from a day when the outer can was fabricated and before the lead was joined to the bottom portion of the outer can by ultrasonic welding. A condition of the laser beam was set so as to increase a light reflectance of a laser-beam applied portion of the outer can. More specifically, as the laser beam, an ultraviolet laser beam having a wavelength of 355 nm was used, and a focal point of the laser beam was set to a position having a depth of 2 mm from the inner surface of the bottom portion. Furthermore, a repetitive frequency of a pulse of the laser beam was set to 80 kHz, and a scanning speed of the laser beam was set to 300 mm/s.

### (Measurement Result)

**[Table 1]**

| | Laser beam application | Standing period (day) | Welding energy (J) | Joining strength |
|---|---|---|---|---|
| Example 1 | Absent | 0 | 2.1 | 100 |
| Example 2 | Absent | 90 | 2.1 | 35 |
| Example 3 | Present | 90 | 2.1 | 100 |

In Table 1, joining strength is represented by a relative value when joining strength in Example 1 is set to 100. As illustrated in Examples 1 and 2, when a standing period after the outer can having the bottomed cylindrical shape was fabricated was long, joining strength of the lead and the outer can was reduced. On the other hand, as illustrated in Example 3, when pre-processing of applying the laser beam was performed even though the outer can was left standing for a long period after being fabricated, joining strength equivalent to joining strength in the case where the lead was ultrasonic-welded to the outer can 16 immediately after the outer can 16 was fabricated could be secured. From these results, as a factor of variation in joining strength of the lead and the outer can by the ultrasonic welding, change of the surface state of the outer can with time is considered, and it is inferred that pre-processing with the laser beam removes influence by generation of an oxide film of the outer can and the like.

The inventers of the present application confirmed that, when the ultrasonic welding was used, joining strength of the lead and the outer can in the case where the copper layer of the lead was welded to the outer can was large as compared with a case where the nickel layer of the lead was welded to the outer can. Further, since the lead included the copper layer, an effect of reducing the internal resistance of the battery could be achieved. Therefore, according to the cylindrical battery of the present embodiment, variation in joining strength of the lead and the outer can is suppressed, and quality and battery performance can be improved.

### REFERENCE SIGNS LIST

10 Cylindrical battery, 11 Positive electrode, 12 Negative electrode, 13 Separator, 14 Electrode assembly, 16 Outer can, 17 Sealing assembly, 18 Upper insulating plate, 19 Lower insulating plate, 20 Positive electrode lead, 21 Negative electrode lead, 21a Nickel layer, 21b Copper layer, 22 Grooved portion, 23 Terminal plate, 24 Lower vent member, 25 Insulating plate, 26 Upper vent member, 27 Sealing plate, 27a Projection, 27b Vent hole, 28 Gasket, 29 Shoulder portion, 31 Bottom portion, 31a Inner surface, 33 Peripheral edge portion, 39 Cylindrical portion, 41 Laser-beam applied portion, 51 Anvil, 51a Upper surface of anvil, 61 Horn, 61a Horn tip portion

## Claims

1. A method of manufacturing a cylindrical battery, the cylindrical battery comprising an electrode assembly in which a first electrode and a second electrode are wound with a separator intervening therebetween, an outer can having a bottomed cylindrical shape and configured to house the electrode assembly, and a sealing assembly configured to close an opening portion of the outer can, the first electrode and an inner surface of a bottom portion of the outer can being electrically connected through a lead, the method including the steps of:
applying a laser beam to at least a part of the inner surface of the bottom portion of the outer can before the electrode assembly is housed, to increase a light reflectance; and
joining the lead extending from the electrode assembly to a laser-beam applied portion where the laser beam is applied on the inner surface, by ultrasonic welding.

2. The method of manufacturing the cylindrical battery according to claim 1, wherein a surface roughness of the laser-beam applied portion is reduced by application of the laser beam.

3. The method of manufacturing the cylindrical battery according to claim 1 or 2, wherein
the lead is made of a clad material fabricated by bonding a copper plate material and a nickel plate material, and
a copper layer disposed on one side of the lead in a thickness direction is joined to the laser-beam applied portion by the ultrasonic welding.

4. A cylindrical battery, comprising:
an electrode assembly in which a positive electrode and a negative electrode are wound with a separator intervening therebetween;
an outer can having a bottomed cylindrical shape and configured to house the electrode assembly;
a sealing assembly configured to close an opening portion of the outer can; and
a negative electrode lead made of a clad material fabricated by bonding a copper plate material and a nickel plate material, and having a copper layer disposed on one side in a thickness direction, wherein
the copper layer of the negative electrode lead is joined to an inner surface of a bottom portion of the outer can.
